# EUROPEAN PATENT APPLICATION

(11) **EP 2 719 605 A1**
(43) Date of publication of application: **16.04.2014**
(21) Application number: 12188291.4
(22) Date of filing: 12.10.2012
(51) Int. Cl.: B62B 9/08

(54) **Brake system**

(71) Applicant: Bie, Henrik Mikael, 129 45 Hägersten (SE)
(72) Inventor: Bie, Henrik Mikael, 129 45 Hägersten (SE)
(74) Representative: Hansson, Anders Max

(57) **Abstract**

A brake system for a pram, pushchair or the like. The system comprises a first handle (1), a second handle and a brake arrangement (14, 15). The first handle (1) is adapted to be attached to the pram or the like. The second handle (5) is reciprocally movable relative the first handle (1) between an extended position and a retracted position, wherein the second handle (5) is resiliently loaded in a direction away from the first handle (1) towards the extended position. The brake arrangement (14, 15) is adapted to engage with at least one wheel of the pram. The second handle (5) is coupled to the brake arrangement such that the brake arrangement (14, 15) is engaged with the at least one wheel when the second handle (5) is in the extended position, and that the brake arrangement (14, 15) is released when the second handle (5) is pushed from the extended position towards the first handle (1) past a disengaging position, the disengaging position being between the extended position and the retracted position.

## Description

### Technical Field of the Invention

The invention relates to the field of prams, pushchairs, baby buggys, baby carriages or the like. In particular, the invention relates to a brake system for such a pram or the like.

### Technical Background

Prams, pushchairs, baby buggys, baby carriages or the like are known as wheeled vehicles used for transporting children of varying sizes in seated and/or reclined positions. These are conventionally equipped with a brake system which is manually engaged by for example a foot pedal or a hand operated switch. Most of the currently available prams or the like use manual brake systems of this type. A safety problem may arise if the driver accidentally forgets to engage the brake system. Accidents have occurred where prams or the like carrying a child have rolled out into road cross-sections or train tracks because the driver has forgotten to engage the brakes. In recent years, prams or the like having rotatable or swiveling front wheels have gained in popularity. Having such swiveling front wheels increases the risk of such accidents since the pram or the like may rotate towards slopes and start to move down the slope if left unattended with the brakes disengaged. To avoid accidents of this type, various solutions for automatic brake systems have been proposed where the brake is automatically engaged when the pram or the like is left unattended.

One such automatic brake system is proposed in GB2468163 where a brake unit comprises a central shaft which is spring-loaded to slide into wheel brake grooves to lock the wheels. The brake unit is disengaged by moving a brake lever forward and holding it with the pram handle. As long as this non-brake-engaging position is maintained, the pram is free to move. One problem with such a mechanism is that the brake lever must be held together with the pram handle at all times when the brake is to be disengaged. This may be tiring and exhausting for the driver of the pram during long walks. Also, the brake lever needs to be pushed towards the pram handle along a semi-circular path and held together with the pram handle at an angle which may be uncomfortable for the driver depending on his/her length.

### Summary of the Invention

It is an object of the present invention to provide a brake system for a pram or the like achieving improved driving comfort by solving at least one of the above mentioned problems associated with known brake systems.

These and other objects of the present invention are achieved by means of a brake system for a pram or the like and a pram comprising such a brake system according to the independent claims.

According to a first aspect of the invention, there is provided a brake system for a pram, pushchair or the like. The system comprises a first handle, a second handle and a brake arrangement. The first handle is adapted to be attached to the pram or the like. The second handle is reciprocally movable relative the first handle between an extended position and a retracted position, wherein the second handle is resiliently loaded in a direction away from the first handle towards the extended position. The brake arrangement is adapted to engage with at least one wheel of the pram. The second handle is coupled to the brake arrangement such that the brake arrangement is engaged with the at least one wheel when the second handle is in the extended position, and that the brake arrangement is released when the second handle is pushed from the extended position towards the first handle past a disengaging position, the disengaging position being between the extended position and the retracted position.

In other words, the second handle is movable back and forth between an extended position and a retracted position relative both the first handle and the pram or the like. The second handle is resiliently loaded in a direction away from the first handle and the pram or the like towards the extended position.

The invention is based on the insight that an advantageous brake system for a pram may be achieved by adding the second handle to the pram which is reciprocally movable towards and resiliently loaded away from the pram. The second handle is used both for pushing the pram forward and also for disengaging the brake arrangement which is normally engaged. The brake arrangement is disengaged when the second handle is pushed from the extended position towards the retracted position past the disengaging position. The brake arrangement preferrably remains disengaged when the second handle is positioned between the retracted position and the disengaging position.

It is understood that the term "pram or the like" used throughout this text is used to describe any type of wheeled vehicle for carrying a child, for example prams or perambulators, strollers, pushchairs, baby buggys or baby carriages. It is furthermore understood that the terms engaged or disengaged refers to the brake arrangement being activated or deactivated, respectively.

In an embodiment of the invention, the disengaging position and the retracted position define a disengaging length there between. The brake arrangement may be disengaged with the at least one wheel when the second handle is at or moved along the disengaging length.

In another embodiment of the invention, the second handle is reciprocally movable relative the first handle in a force transferring direction towards the pram or the like. The force transferring direction refers to the direction in which the driver normally applies a pushing force to the pram. The force transferring direction may be at an angle, for example 30, 35, 40, 45 or 50 degrees, relative the horizontal direction of the chassis of the pram or the like. The horizontal direction may correspond to the ground surface on which the pram or the like is driven. Because the second handle is moved in the same direction as in which the pushing force is normally applied, comfortable driving and intuitive use of the brake system is achieved.

In yet another embodiment, the second handle is reciprocally movable relative the first handle along an essentially straight line. Thereby, the second handle may be pushed towards the first handle to release the brake arrangement in a comfortable way for all drivers, independent of his/her length.

In yet another embodiment of the invention, the first and second handles are in abutment when the second handle is in the retracted position. In other words, the first and second handles may be held together in order to disengage or release the brake arrangement from the at least one wheel of the pram or the like. Thereby, when the handles are held together or is in abutment with each other, the pram or the like may be strolled downhill or pulled backwards up a staircase or into a bus or the like without the brake arrangement being engaged or active. It is understood that the first and second handles do not normally need to be held together during driving of the pram or the like because the brake arrangement is disengaged when the second handle is at or moved along the disengaging length. In particular, the handles do not need to be held together when driving on a substantially flat, horizontal or non-inclined ground surface since the second handle is positioned somewhere along the disengaging length. The exact position depends on the inclination of the surface and the force transferred from the driver to the second handle.

In yet another embodiment, the brake system comprises means for selectively disengaging the brake arrangement such that the brake arrangement is disengaged from the at least one wheel of the pram or the like. Thereby, the brake arrangement may be disengaged at all times, i.e. without having to push the second handle towards the first handle past the disengaging position.

In yet another embodiment, the disengaging length is at least 1/3 or 1/2 or 2/3 or 3/4 of the total length between the extended position and the retracted position. In yet other embodiments, the disengaging length may be at least 25 or 50 or 75 or 100 or 125 mm. Thereby, smooth and comfortable driving is achieved. If the ground surface inclines downhill, the pram or the like will roll away from the driver (due to the gravitational force), and the second handle will move towards the extended position, eventually causing the brake arrangement to engage with the at least one wheel. If the disengaging length is very short, the brake arrangement will engage with the at least one wheel as soon as the ground surface starts to incline downhill, thereby resulting in jerky driving due to unintentional braking. Thus, it is advantageous that the disengaging length is of a certain length, because small variations in the inclination of the ground surface on which the pram is driven, e.g. a small pit or short downhill, will not cause the brake arrangement to engage with the at least one wheel.

In yet another embodiment, the second handle is resiliently loaded to be in the extended position when essentially no force is applied to the second handle. The second handle may be resiliently loaded such that the weight of the hands and underarms of the driver is sufficient to push the second handle past the disengaging position. In other words, the resilient loading of the second handle may be such that the brake arrangement is disengaged or deactivated when the driver puts his/her hands on the second handle, i.e. essentially no additional force from the driver may be necessary to release the brakes.

In yet another embodiment, the gripping portion of the second handle has a cross section with a cut-out corresponding to a cross section of a gripping portion of the first handle. Alternatively, the first handle may have a cross section with a cut-out corresponding to a cross section of a gripping portion of the second handle. The cross sections of the gripping portions of the respective handle may be such that when pressed together, they form an essentially circular, elliptical, race-track shaped cross section. Thereby, the handles are comfortable to hold when pressed together.

In yet another embodiment, the first handle is adapted to be attached to a chassis portion of the pram, and the second handle comprises a gripping portion and a coupling portion. The coupling portion is adapted to be coaxially arranged with the chassis portion and to be reciprocally movable relative the chassis portion. The chassis portion may be a tube or pipe extending from the pram or the like in the direction of the driver, i.e. extending backwards from the pram and at an angle relative the horizontal direction of the pram. This direction may be the force transferring direction. The tube or pipe may have a circular, elliptical or racetrack shaped cross section. The coupling portion may be coaxially arranged with the chassis portion in the sense that it is arranged fully or partially inside or around an outer periphery or envelope surface of the tube or pipe.

In yet another embodiment, the first handle comprises a coupling portion and a gripping portion, where the coupling portion is adapted to be attached to the chassis portion of the pram, and the gripping portion is reciprocally movable relative the coupling portion or the chassis portion between an initial position and a retracted position in the same direction as the second handle, wherein the gripping portion of the first handle is resiliently loaded in a direction away from the coupling portion or the chassis portion towards the initial position. The retracted position of the second handle may coincide with the initial position of the first handle. Alternatively, the retracted position of the second handle may be slightly closer to the pram or the chassis portion of the pram such that the second handle and the gripping portion of the first handle are movable together (in abutment with each other) towards the pram or chassis portion of the pram between the initial position of the gripping portion of the first handle and the retracted position of the second handle, i.e. before the second handle reaches its retracted position. It is understood that the retracted position of the gripping portion of the first handle is closer to the pram or the chassis portion of the pram than the retracted position of the second handle. It is furthermore understood that the gripping portion of the first handle is not movable further away from the pram or chassis portion of the pram than to the initial position. Having a reciprocally movable first handle may be advantageous in order to prevent jamming or squeezing of fingers or hands between the first and second handles, in particular when the second handle is close to its retracted position.

According to a second aspect of the invention, there is provided a pram, pushchair, baby buggy, baby carriage or the like comprising a brake system according to the first aspect of the invention or any embodiments thereof.

### Brief Description of the Drawings

These and other aspects of the present invention will now be described in more detail, with reference to the appended drawings showing currently preferred embodiments of the invention, wherein:
figures 1a-c are illustrations of a brake system according to a first embodiment of the invention,
figures 2a-b are illustrations of a brake system according to a second embodiment of the invention,
figure 3 is an illustration of the first and second handles according to a third embodiment of the invention,
figure 4 is an illustration of the gripping portions of the first and second handles according to an embodiment of the invention, and
figure 5 is an illustration of a pram according to an embodiment of the second aspect of the invention.

### Detailed Description

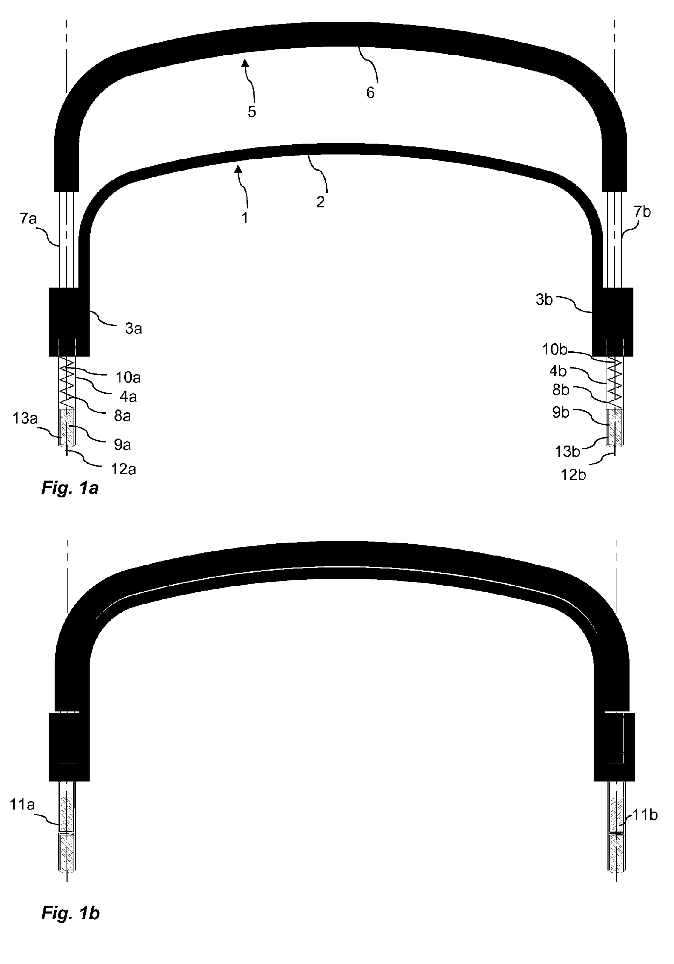

Figures 1a-b illustrate front views of the first and second handles of a brake system according to a first embodiment of the invention. The first handle 1 comprises a gripping portion 2 and attachment portions 3a-b. Each of the attachment portions 3a-b is adapted to be fixedly attached to chassis portions 4a-b of the pram or the like. Note that only upper segments of the chassis portions 4a-b are shown in the figure. The chassis portions are tubes extending from the pram or the like in the direction of the driver. The second handle 5 comprises a gripping portion 6 and coupling portions 7a-b. The gripping portion and the coupling portions are integrally formed with each other in a U-shape, where the coupling portions constitute leg portions. Each coupling portion 7a-b is adapted to be coaxially arranged with the chassis portions 4a-b in the sense that the coupling portions are reciprocally movable inside the respective chassis portions. In other words, the outer diameter of the coupling portions essentially match the inner diameter of the chassis portions. The coupling portions and the chassis portions have essentially circular cross sections, but may in other embodiments be for example elliptical, racetrack-shaped, rectangular, square or triangular. The attachment portions 3a-b of the first handle each comprise linear bearing portions through which the coupling portions 7a-b are slideably arranged, thereby supporting the second handle. Springs 8a-b are arranged inside the chassis portion between the respective coupling portions 7a-b and stopping members 9a-b such that the second handle is spring-loaded in a direction away from the first handle and the chassis portions. The stopping members are arranged inside the respective chassis portion and are fixedly attached thereto. First ends of wires 10a-b are attached to respective lower portions of the coupling portions 7a-b by means of stop screws 11a-b. The wires pass through the respective spring 8a-b and the respective stopping member 9a-b. Wire covers or flexible tubes 12a-b cover the portions of the wires 10a-b which extend from the stopping members 9a-b on the opposite side of the springs 8a-b. The flexible tubes 12a-b are attached to the respective stopping member 9a-b by means of stop screws 13a-b. The wires are reciprocally movable inside the flexible tubes.

In figure 1a, the second handle 5 is in the extended position, i.e. at a distance from the first handle 1. Thereby, the wires 10a-b are strained because of the springs 8a-b.

In figure 1b, the second handle 5 is in the retracted position, i.e. in abutment with the first handle 1. Thereby, the springs 8a-b are both in a compressed state, and a lower end portion of the coupling portions 7a-b are in abutment or contact or at least in the vicinity of the stopping members 9a-b. The wires 10a-b are thereby less strained or tensioned compared with figure 1a.

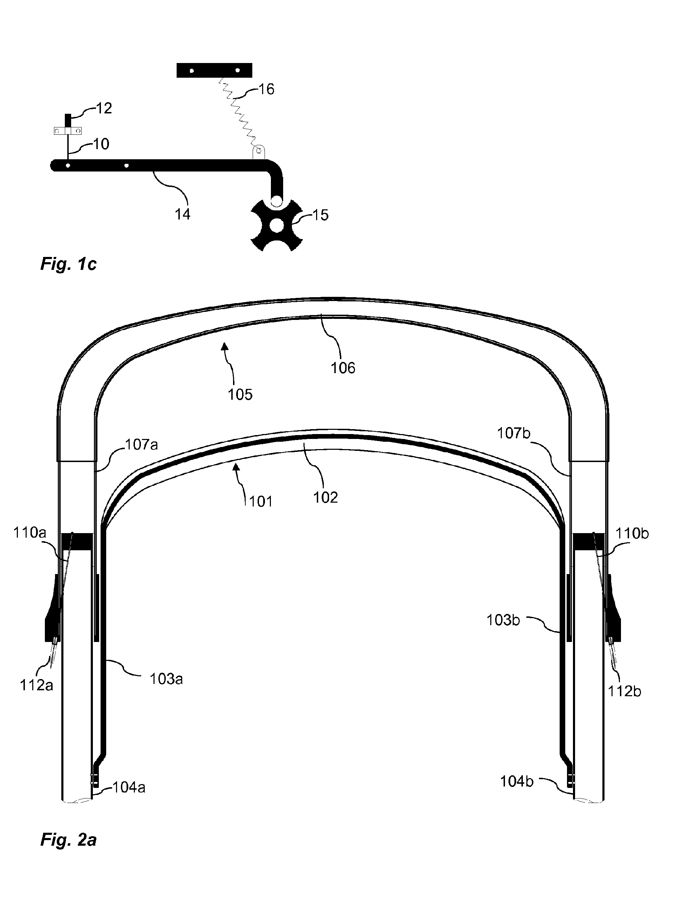

Figure 1c is a side view of the brake arrangement of a brake system according to the first embodment of the invention. The brake arrangement comprises a brake lever 14 and a toothed gear wheel 15. The gear wheel is adapted to be coupled or attached to at least one wheel of the pram or the like. A first end of the brake lever 14 is arranged to mesh with the gear wheel 15 such that the brake arrangement is engaged with the at least one wheel. A second end of the brake lever 14 is attached to a second end of one of the wires 10. The brake lever 14 is adapted to be pivotably attached to the pram or the like at a position between its first and second ends. A spring 16 is attached between the pram or the like and the brake lever in the vicinity of its first end such that the brake lever 14 is spring-loaded in a direction away from the gear wheel 15, i.e. towards a disengaged state. Thereby, when the second handle 5 is pushed towards the first handle 1 and the wires 10 looses strain or tension, the first end of the brake lever will be lifted from the gear wheel, consequently releasing or disengaging the brake arrangement. It is understood that the second handle 5 needs to be pushed a certain distance from the extended position (past the disengaging position) for the wire too loose enough strain or tension to lift the first end of the brake lever sufficiently for the brake lever to be disengaged with the gear wheel and thereby be disengaged with the at least one wheel of the pram or the like.

Figures 2a-b illustrates a second embodiment of the invention. The first handle 101 comprises a gripping portion 102 and attachment portions 103a-b. The attachment portions 103a-b are adapted to be fixedly attached to respective chassis portions 104a-b of the pram or the like. Note that only upper segments of the chassis portions 104a-b are shown in the figure. The chassis portions are tubes extending from the pram or the like in the direction of the driver. The second handle 105 comprises a gripping portion 6 and coupling portions 107a-b. The gripping portion and the coupling portions are integrally formed with each other in a U-shape, where the coupling portions constitute leg portions. Each coupling portion 107a-b is adapted to be coaxially arranged with the chassis portions 107a-b in the sense that the coupling portions are reciprocally movable around the outer periphery of the respective chassis portions. In other words, the inner diameter of the coupling portions essentially match the outer diameter of the chassis portions. The coupling portions and the chassis portions have essentially circular cross sections, but may in other embodiments be for example elliptical, racetrack-shaped, rectangular, square or triangular. First ends of wires 110a-b are attached to a respective upper end portion of the chassis portions 104a-b. The wires pass through a slit or slit in the longitudinal direction of the chassis portions and through the coupling portions 107a-b. Wire covers or flexible tubes 112a-b cover the portions of the wires 110a-b which extend out through the coupling portions. First ends of the flexible tubes 112a-b are attached to the respective coupling portion 107a-b. The wires are reciprocally movable inside the flexible tubes.

In figure 2a, the second handle 105 is shown in a front view in the extended position, i.e. at a distance from the first handle 101. When the second handle 105 is pushed towards the first handle 101, the flexible tubes 112a-b are pushed downwards, thereby tensioning the wires 110a-b.

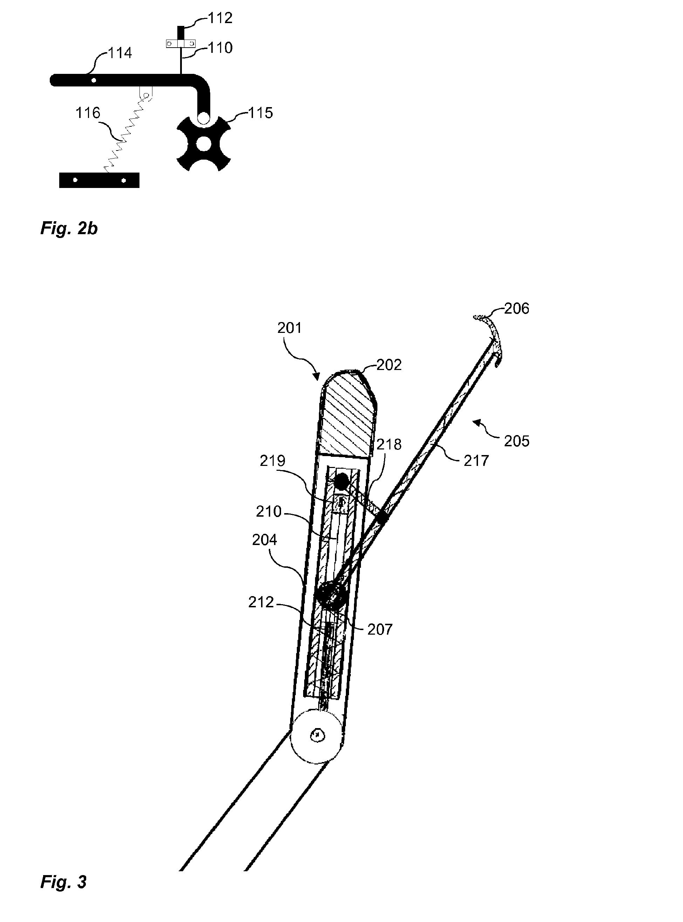

Figure 2b is a side view of the brake arrangement of a brake system according to the second embodment of the invention. The brake arrangement comprises a brake lever 114 and a toothed gear wheel 115. The gear wheel is adapted to be coupled or attached to at least one wheel of the pram or the like. The brake lever 114 is adapted to be pivotably attached to the pram or the like at or in the vicinity of a first end thereof. A second end of the brake lever 114 is arranged to mesh with the gear wheel 115 such that the brake arrangement is engaged with the at least one wheel. A second end of one of the wires 110 is furthermore attached to the brake lever 114 in the vicinity of its second end. A Second ends of the flexible tubes 112 are furthermore attached to a fixed portion of the brake arrangement or are adapted to be fixedly attached to the pram or the like. A spring 116 is attached to a fixed portion of the brake arrangement or is adapted to be between the pram or the like and the brake lever in the vicinity of its second end such that the brake lever 114 is spring-loaded in a direction towards the gear wheel 115. Thereby, when the second handle 105 is pushed towards the first handle 101 and the wires 110 are strained or tensioned, the second end of the brake lever will be lifted from the gear wheel, consequently releasing or disengaging the brake arrangement. Only one spring 116 is used in this embodiment. The second handle is resiliently loaded towards the extended position by means of the spring 116. It is understood that the second handle 105 needs to be pushed a certain distance from the extended position (past the disengaging position) for the second end of the brake lever to be sufficiently lifted for the brake lever to be disengaged with the gear wheel and thereby be disengaged with the at least one wheel of the pram or the like.

Figure 3 is a side cross-section view of the first and second handles according to a third embodiment of the invention. The first handle 201 comprises a gripping portion 202 fixedly attached to an upper end of a chassis portion 204 of the pram or the like. A lower end of the chassis portion 204 is pivotably coupled to a tube or the like extending from the pram or the like in the direction of the driver. The second handle 205 comprises a gripping portion 206, a coupling portion 207 and first and second lever portions 217, 218. The gripping portion 206 is arranged at an end of the first lever portion 217. The other end of the first lever portion 217 is pivotably attached to the coupling portion 207. The second lever portion 218 is pivotably attached in one end to the chassis portion 204 and in the other end to the first lever portion 217 at a position between the ends thereof. The coupling portion 207 is adapted to be coaxially arranged with the chassis portion 204 in the sense that the coupling portion is slidably and reciprocally movable inside the chassis portion. A first end of the wire 210 is attached to an upper attachment member 219 of the chassis portion 204. A spring 208 is arranged inside the chassis portion beneath the coupling portion 207 such that the gripping portion of the second handle is spring-loaded in a direction away from the first handle. The wire passes through the spring 208 and the coupling portion 207. A wire cover or flexible tube 212 cover the portion of the wire 210 which extend beneath the coupling portion. A first end of the flexible tube 212 is attached to the coupling portion 207. The wire is reciprocally movable inside the flexible tube. The second end of the wire 201 and the flexible tube 212 are coupled to a brake arrangement of the same type as shown in figure 2b. In figure 3, the second handle 205 is in the extended position, i.e. at a distance from the first handle 201. When the second handle 205 is pushed towards the first handle 201, the coupling portion 207 and the flexible tube 212 is pushed downwards, thereby tensioning the wire 210.

In other embodiments, the brake arrangement may be of another type than shown in figures 1c and 2b, for example comprising a spring loaded shaft which engages with grooves or holes in a brake member which is coupled to at least one wheel of the pram or the like. In yet other embodiments, the second handle is coupled to the brake arrangement by means of a link mechanism, a hydraulic arrangement or electrical arrangement.

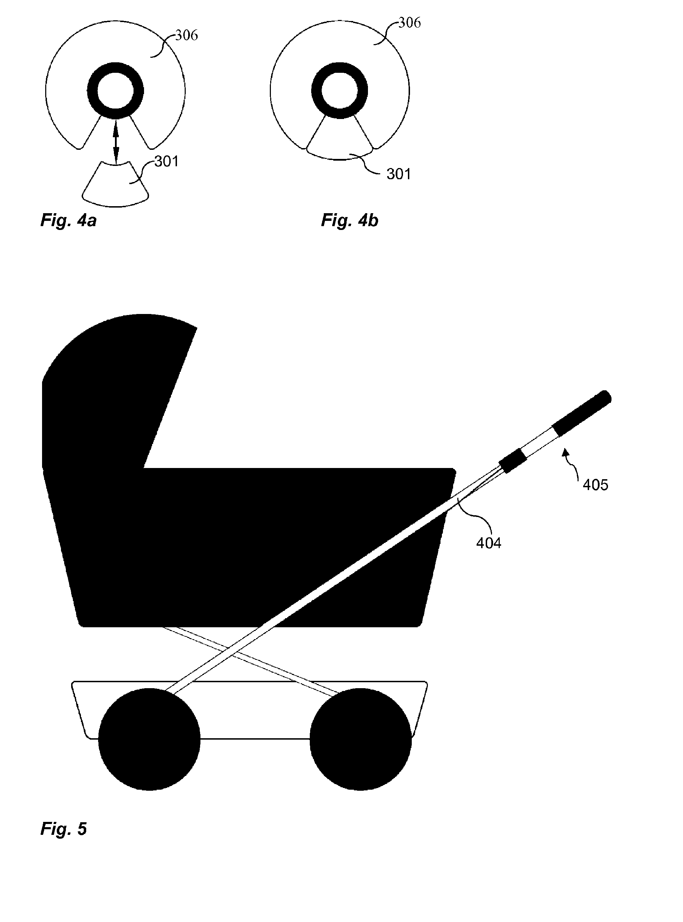

Figures 4a-b are illustrations of the gripping portions of the first and second handles according to an embodiment of the invention. The gripping portion 306 of the second handle has a cross section with a cut-out corresponding to a cross section of the gripping portion 302 of the first handle such that when pressed together, they form an essentially circular cross section.

Figure 5 is a side view illustration of a pram comprising a brake system according to the second embodiment. The second handle 405 is reciprocally movable relative the first handle (not shown) and the chassis portion 404 of the pram.

Although exemplary embodiments of the present invention have been shown and described, it will be apparent to the person skilled in the art that a number of changes and modifications, or alterations of the invention as described herein may be made. Thus, it is to be understood that the above description of the invention and the accompanying drawing is to be regarded as nonlimiting examples thereof and that the scope of the invention is defined in the appended patent claims.

## Claims

1. A brake system for a pram, pushchair or the like, said system comprising:
a first handle adapted to be attached to said pram;
a second handle being reciprocally movable relative said first handle between an extended position and a retracted position, said second handle being resiliently loaded in a direction away from said first handle towards said extended position;
a brake arrangement adapted to engage with at least one wheel of said pram;
wherein said second handle is coupled to said brake arrangement such that the brake arrangement is engaged with said at least one wheel when said second handle is in said extended position, and that the brake arrangement is released when said second handle is pushed from said extended position towards said first handle past a disengaging position, said disengaging position being between said extended position and said retracted position.

2. The brake system according to claim 1, wherein said disengaging position and said retracted position define a disengaging length there between.

3. The brake system according to claim 2, wherein said brake arrangement is disengaged with said at least one wheel when said second handle is at or moved along said disengaging length.

4. The brake system according to claim 2 or 3, wherein said disengaging length is at least 2/3 of the total length between the extended position and the retracted position.

5. The brake system according to claim 2 or 3, wherein said disengaging length is at least 50 mm.

6. The brake system according to any one of the preceding claims, wherein said second handle is reciprocally movable relative said first handle along an essentially straight line.

7. The brake system according to any one of the preceding claims, wherein said second handle is resiliently loaded to be in said extended position when essentially no force is applied to said second handle.

8. The brake system according to any one of the preceding claims, wherein a gripping portion of said second handle has a cross section with a cut-out corresponding to a cross section of a gripping portion of the first handle such that when pressed together, they form an essentially circular, elliptical or race-track shaped cross section.

9. The brake system according to any one of the preceding claims, wherein said first handle is adapted to be attached to a chassis portion of said pram, and wherein said second handle comprises a gripping portion and a coupling portion, said coupling portion being adapted to be coaxially arranged with said chassis portion and to be reciprocally movable relative said chassis portion.

10. The brake system according to any one of the claim 9, wherein said gripping portion and said coupling portion of said second handle are integrally formed or fixedly attached to each other.

11. The brake system according to any one of the claim 9,
wherein said second handle comprises a gripping portion arranged at an end of a first lever portion, and
wherein the other end of said first lever portion of said second handle is pivotably attached to said coupling portion of said second handle, and
wherein a second lever portion of said second handle is pivotably attached in one end to said chassis portion and in the other end to said first lever portion at a position between the ends thereof.

12. The brake system according to claim 10 or 11, further comprising a wire arrangement having a wire being reciprocally movable inside a flexible tube, wherein said second handle is coupled to said brake arrangement by means of said wire arrangement.

13. The brake system according to claim 12,
wherein one end of said wire is adapted to be attached to said chassis portion and the other end is coupled to an engaging member of said brake arrangement, and
wherein one end of said flexible tube is attached to said coupling portion and the other end is attached to a fixed portion of said brake arrangement, and
wherein said engaging member of said brake arrangement is spring-loaded towards an engaged state, such that said engaging member is forced to a disengaged state when said wire is tensioned resulting from said second handle being pushed from said extended position towards said first handle past said disengaging position.

14. The brake system according to claim 12,
wherein one end of said wire is attached to said coupling portion and the other end is coupled to an engaging member of said brake arrangement, and
wherein said second handle is spring-loaded in a direction away from said first handle such that said wire is tensioned, and
wherein said engaging member of said brake arrangement is spring-loaded towards a disengaged state, such that said engaging member is released to said disengaged state when said wire is looses tension resulting from said second handle being pushed from said extended position towards said first handle past said disengaging position.

15. A pram, pushchair or the like comprising a brake system according to any one of the preceding claims.
